# EUROPEAN PATENT APPLICATION

(11) **EP 1 394 589 A1**
(43) Date of publication of application: **03.03.2004**
(21) Application number: 02360255.0
(22) Date of filing: 02.09.2002
(51) Int. Cl.: G02B 6/50, H02G 9/06, H02G 1/08

(54) **Sewer pipe with cable in groove along its internal wall surface**

(71) Applicant: ALCATEL, 75008 Paris (FR)
(72) Inventor: Li, Hong, 41169 Mönchen-Gladbach (DE); Nothofer, Klaus, 40699 Erkrath (DE)
(74) Representative: Brose, Gerhard

(57) **Abstract**

The invention relates to a sewer canal (2) system which has at least one groove (1) longitudinally along its inner wall surface (3) and a cable or conduit fitted inside said groove (1). It further relates to a method for installing a cable or a conduit in said sewer canal (2), and a mobile device for carrying out the installation tasks.

## Description

### Field of the Invention and Related Art

The invention relates to a sewer canal, preferably a clay or concrete sewer canal, which has at least one groove longitudinally alongside its internal wall surface and a cable or conduit fitted inside said groove, and a method for installing said cable or conduit in said sewer canal, and a mobile device which will be in charge of carrying this task.

Using of sewer pipes or other underground supply conduits for laying communication cables is a possibility already being exploited to lower the costs of underground work for communications subscriber access. It also enables subscriber access of this kind to be extended orientated to need and quickly, which is becoming increasingly important of late owing to the multiplicity of operators. Some known techniques for laying communication cables in sewer pipes are for example the use of tubular liners which expand and press the cable onto the inner wall of the pipe or customised robots which pull in and fix the conduits to the sewer wall by means of metal ring clamps.

In German patent DE 19843263 for example, it is also disclosed a method for attaching optical cable to the inner wall of a sewer canal which uses a self-propelled robot. The robot pulls the cable during the forward motion and then, during return motion, attaches it to the canal wall by means of robot tools, e.g. glue material.

### Object of the Invention

The object underlying the invention is to provide a new method for installing cable in sewer canals, with limited damage of the sewer, and which is flexible and cost-effective, and a device which will be in charge of the installation process.

The object is achieved according to the invention by a sewer canal system with a grooved cable according to claim 1, a method for installing a cable or a conduit in said sewer canal system according to claim 3, and a mobile device in charge of carrying the installation tasks according to claim 4.

Standard methods for inspection, cleaning and repair of sewer canals can be applied to the installed system.
If a conduit element is used for fitting inside the groove, the invention provides easy cable exchange and repair.

### Brief Description of the Drawings

An embodiment example of the invention is now explained with the aid of Figs. 1 to 4.

Fig. 1 shows an embodiment of a sewer pipe which has one groove alongside its inner wall.

Fig. 2 A,B shows in more detail two possible embodiments of the section of the pipe with the groove, from Fig.1, which has a cable or conduit inside.

Fig.3 shows a device in charge of milling the groove and fitting the cable inside according to the methods described in the invention.

Fig.4 shows another possible embodiment of the installing device.

### Detailed Description of the Drawings

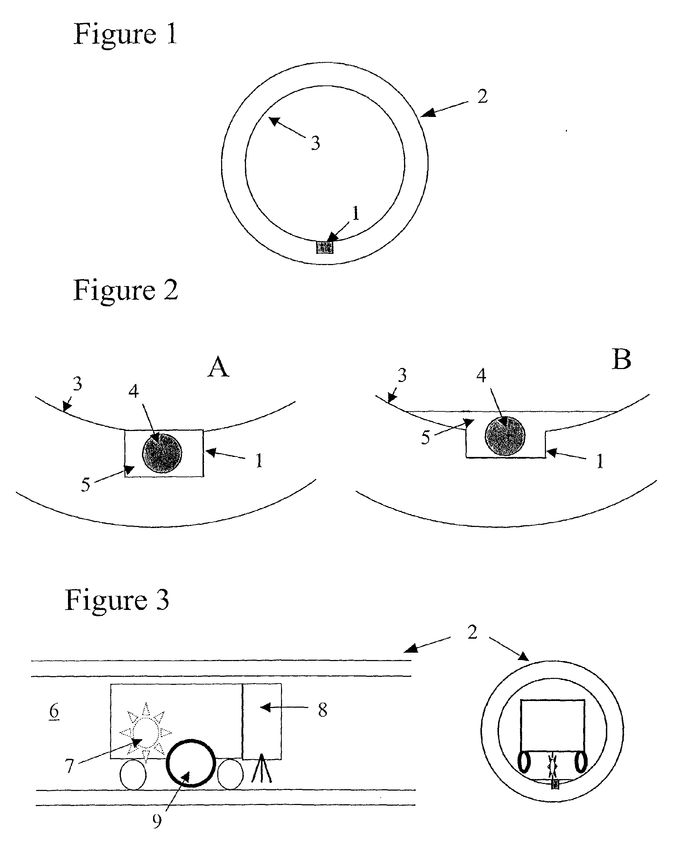

Fig. 1 shows an embodiment of a sewer pipe 2 which has one groove 1 alongside its inner wall 3. The groove 1 shall be small compared to the wall thickness of the sewer canal 2, and is therefore referred to also as mini-groove.

More than one mini-groove 1 can be advantageously formed inside the sewer pipe. The grooves 1 are preferably milled in the place where the tensile stress on the inner wall 3 is minimal, i.e. left or right side of the maximum horizontal diameter so that the impact on the operational performance of the sewer canal 2 system is negligible.

Fig. 2 A,B shows in more detail two possible embodiments of the section of the pipe 2 in which the groove 1 is milled, said groove 1 having a cable or conduit 4 inside.

Fig. 2 A shows the cable or conduit 4 which is totally embedded in the groove 1 inside the sewer pipe 2 wall, and Fig. 2 B shows the cable or conduit 4 which is not totally hidden by the groove 1.

The cable or conduit 4 is fixed to the groove 1 to avoid it from coming out of its fitting position, and preferably, the cable or conduit 4 and the groove 1 will be sealed in a manner such that a smooth surface of the inner wall 3 of the sewer pipe 2 is provided. The sealing material 5 used can be one of cement-bound injections mortal, epoxy resin or a glue material e.g. silanmodified glue. Although another techniques for fixing the cable or conduit 4 to the groove 1, like for example the use of clips, are also possible.

Fig.3 shows a mobile device 6 in charge of installing the cable inside the sewer canal 2. It comprises a milling tool 7, and a pressing tool 9, which are interchangeable.

The mobile device 6, provided with the necessary tools already mentioned, will install the cable according to the following method:
milling at least one mini-groove into the surface of the inner wall of the sewer pipes;
laying the conduit or cable directly in the groove;
fixing the conduit or cable to the groove; and
pressing and/or heating the groove area for rebuilding the inner wall surface of the sewer pipe.

It is advantageous that the installing device 6 is able to move in either direction of the sewer pipe 2 and thus carry some of the steps described above in the forward path and others in the return path.

At first, one or more mini-grooves are milled into the surface of the inner wall of the sewer canal, e.g. clay or concrete canals.

At this point, once the channel or groove has been formed, it could be also advantageous to clean e.g. vacuum or blowing, the debris left inside and/or to spray a first resin layer onto the groove before fitting the cable or conduit inside. If these steps are considered necessary, the device could also be provided with a cleaning and spray unit 8 as shown in the figure, to carry out these tasks.

The fitting of the conduit or cable is performed by laying it down inside the groove and then fixing it to ensure that it remains on the desired position.

The groove can be sealed either with cement-bound injections mortal, epoxy resin or a glue material e.g. silanmodified glue. And, finally, to provide the inner wall of the sewer pipe 2 with a smooth surface, the pressing unit presses, and also heats if necessary, the sealing material covering the cable and the groove.

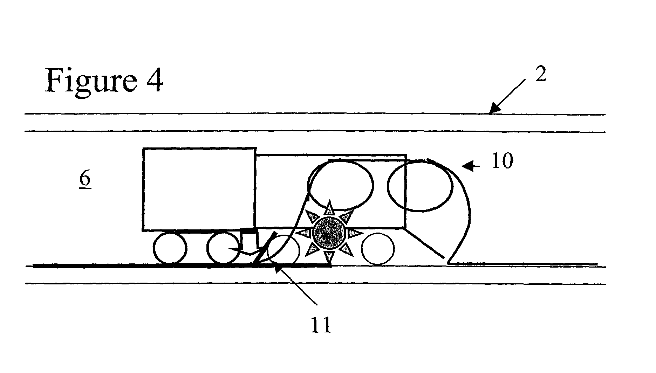

Fig.4 shows another possible embodiment of the installing mobile device 6. It comprises also a wheel system 10 and a leading channel path 11 for picking up the conduit and take it to the desired laying position, that is, inside the groove.

In some cases it could be advantageous to pull the conduit in the sewer pipe 2 prior to introducing the installing device 6. The device will then pick up the conduit and transport it by means of wheel system or a leading channel path to the laying position.

## Claims

1. Sewer canal (2) system **characterized in that** it has at least one groove (1) longitudinally alongside its inner wall surface (3) and a cable or conduit(4) fixed to said groove (1).

2. The sewer canal system according to claim 1 **characterized in that** the cable or conduit (4) is fixed in the groove (1) by means of a sealing material (5), such as cement-bound injections mortal, epoxy resin or a glue e.g. silanmodified glue.

3. Method for installing a cable or a conduit (4) in sewer canal (2), **characterized in that** said method comprises the steps of:
milling at least one groove (1) into the surface of the inner wall (3) of a sewer canal (2);
laying the cable or conduit (4) directly in the groove (1);
fixing the cable or conduit (4) in the groove (1); and
pressing and/or heating the groove (1) area for rebuilding the inner wall (3) surface of the sewer canal (2).

4. Mobile device (6) for installing a cable or conduit (4) in a sewer canal (2) **characterized in that** it comprises a milling tool (7), and a pressing and/or heating tool (9) and follows the installing method according to claim 3.

5. The mobile device (6) according to claim 4 which can move inside the sewer canal (2) in forward and backward direction, **characterized in that** it can carry some of the steps of the method according to claim 3 in the forward direction and some of them in the backwards direction.

6. The mobile device (6) according to claim 4 **characterized in that** it comprises a wheel system (10) and a leading channel path (11), for picking up the cable or conduit (4) inside the sewer canal (2)and laying it inside the groove (1).
